# EUROPEAN PATENT SPECIFICATION

(11) **EP 1 520 763 B1**
(45) Date of publication and mention of the grant of the patent: **17.01.2007**
(21) Application number: 03256189.6
(22) Date of filing: 30.09.2003
(51) Int. Cl.: B60T 8/26, B62L 3/08

(54) **Hydraulic vehicle brake system**
Hydraulische Fahrzeugbremsanalage
Système de freinage hydraulique pour véhicule

(43) Date of publication of application: 06.04.2005
(73) Proprietor: Kwang Yang Motor Co., Ltd., San-Min Dist., Kaohsiung City (TW)
(72) Inventor: Tung, Kun-Nan, Tso-Ying Dist., Kaohsiung City (TW)
(74) Representative: Skone James, Robert Edmund

(56) References cited:
- DE-A- 2 849 948
- US-A- 4 174 867
- US-A- 5 501 511
- PATENT ABSTRACTS OF JAPAN vol. 011, no. 114 (M-579), 10 April 1987 (1987-04-10) -& JP 61 257349 A (HONDA MOTOR CO LTD), 14 November 1986 (1986-11-14)
- PATENT ABSTRACTS OF JAPAN vol. 1998, no. 13, 30 November 1998 (1998-11-30) -& JP 10 226384 A (NISSIN KOGYO KK), 25 August 1998 (1998-08-25)

## Description

This invention relates to a brake, and more particularly to a hydraulic vehicle brake system that includes front and rear braking disk units for braking front and rear wheel units, respectively.

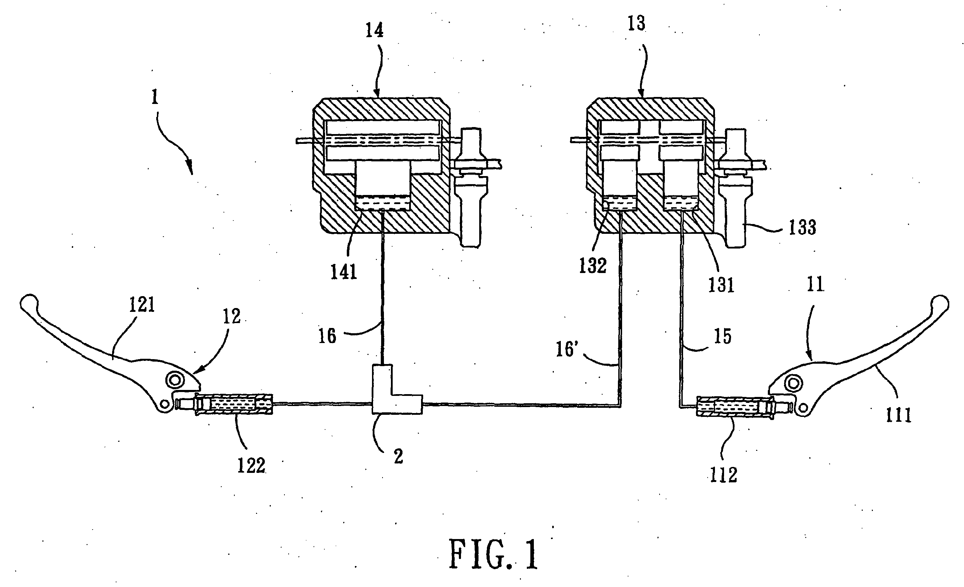

Referring to Fig. 1, a conventional hydraulic vehicle brake system 1 is shown to include a right brake lever unit 11, a left brake lever unit 12, a front brake unit 13, a rear brake unit 14, a front brake oil conduit unit 15, a first rear brake oil conduit unit 16, and a second rear brake oil conduit unit 16'.

The right brake lever unit 11 includes a right brake lever 111 and a small hydraulic cylinder 112. The left brake lever unit 12 includes a left brake lever 121 and a small hydraulic cylinder 122.

The front brake unit 13 is used to brake a front wheel unit (not shown), and has first and second large hydraulic cylinders 131, 132 that are not in fluid communication with each other and that are used to activate a braking disk unit 133. The rear brake unit 14 is used to brake a rear wheel unit (not shown), and has a large hydraulic cylinder 141. The front brake oil conduit unit 15 is in fluid communication with the small hydraulic cylinder 112 of the right brake lever unit 11, and the first large hydraulic cylinder 131 of the front brake unit 13.

The first rear brake oil conduit unit 16 is in fluid communication with the small hydraulic cylinder 122 of the left brake lever unit 12 and the large hydraulic cylinder 141 of the rear brake unit 14. The second rear brake oil conduit unit 16' is in fluid communication with the small hydraulic cylinder 122 of the left brake lever 12, and the second large hydraulic cylinder 132. A three-way tube 2 is in fluid communication with the first and second rear brake oil conduit units 16, 16' and the small hydraulic cylinder 122 of the left brake lever unit 12.

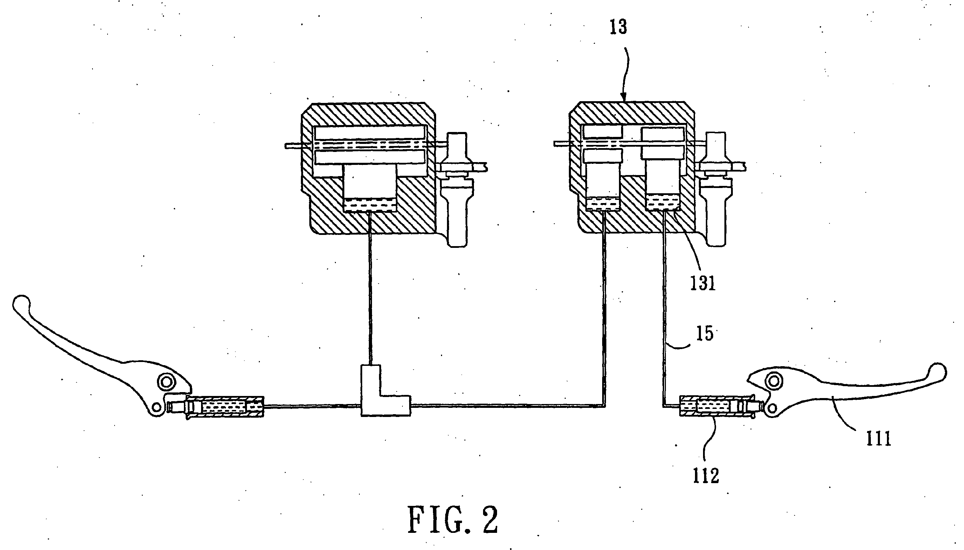

Referring to Fig. 2, when the right brake lever 111 is actuated, hydraulic oil flows from the small hydraulic cylinder 112 into the first large hydraulic cylinder 131 so as to brake the front wheel unit (not shown).

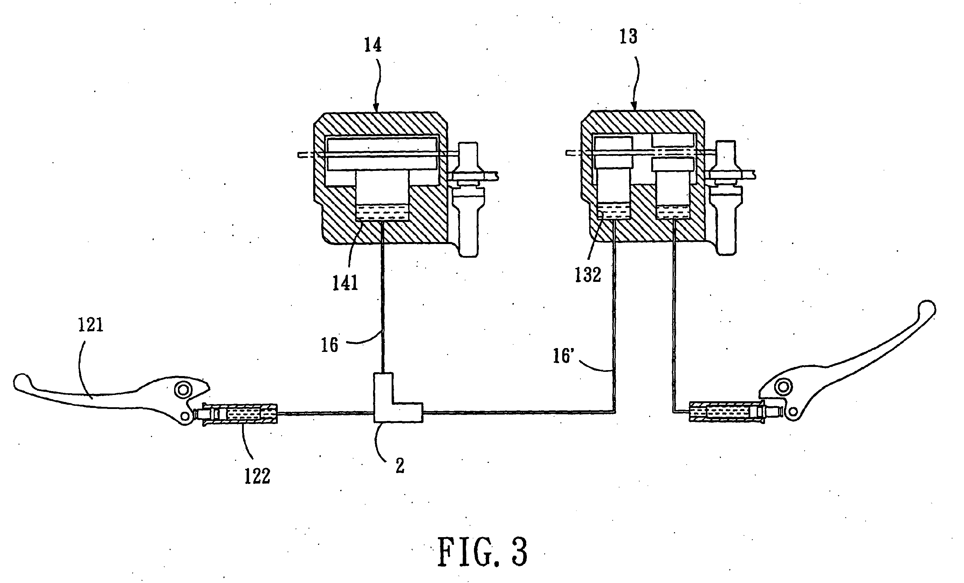

Referring to Fig. 3, when the left brake lever 121 is actuated, hydraulic oil flows from the small hydraulic cylinder 122 into the large hydraulic cylinder 141 of the rear brake unit 14 and the second hydraulic cylinder 132 through the three-way tube 2 so as to brake the front and rear wheel units (not shown). The aforesaid conventional hydraulic vehicle brake system 1 has a disadvantage in that it is difficult to form the first and second small hydraulic cylinders 131, 132 in the front brake unit 13 due to the fact that the first and second small hydraulic cylinders 131, 132 are not in fluid communication with each other, and are connected to the braking disk unit 133 for braking the front wheel unit (not shown).

U.S. Patent No. 5,501,511 discloses a hydraulic vehicle brake device that includes a coupler in the form of a hydraulic cylinder, which has a duct. The coupler is inadvantageous in that it is difficult to form the duct in the body of the coupler, thereby resulting in an increase in the manufacturing costs of the brake device.

Therefore, the object of this invention is to provide a hydraulic vehicle brake system that includes a plurality of hydraulic cylinders, each of which can be formed easily on a vehicle.

According to this invention, the object is attained by the hydraulic vehicle brake system with the features of claim 1.

These and other features and advantages of this invention will become apparent in the following detailed description of the preferred embodiments of this invention, with reference to the accompanying drawings, in which:
Fig. 1 illustrates a conventional hydraulic vehicle brake system;
Fig. 2 illustrates how a right brake lever of the conventional hydraulic vehicle brake system is actuated to brake a front wheel unit;
Fig. 3 illustrates how a left brake lever of the conventional hydraulic vehicle brake system is actuated to brake the front wheel unit and a rear wheel unit;
Fig. 4 illustrates the first preferred embodiment of a hydraulic vehicle brake system according to this invention, which is applied to a two-wheeled motorcycle;
Fig. 5 illustrates how a right brake lever is actuated to brake a front wheel of the motorcycle;
Fig. 6 illustrates how a left brake lever is actuated to brake the front wheel and a rear wheel of the motorcycle;
Fig. 7 illustrates the second preferred embodiment of a hydraulic vehicle brake system according to this invention;
Fig. 8 illustrates the third preferred embodiment of a hydraulic vehicle brake system according to this invention;
Fig. 9 illustrates the fourth preferred embodiment of a hydraulic vehicle brake system according to this invention; and
Fig. 10 illustrates the fifth preferred embodiment of a hydraulic vehicle brake system according to this invention.

Before the present invention is described in greater detail in connection with the preferred embodiments, it should be noted that similar elements and structures are designated by like reference numerals throughout the entire disclosure.

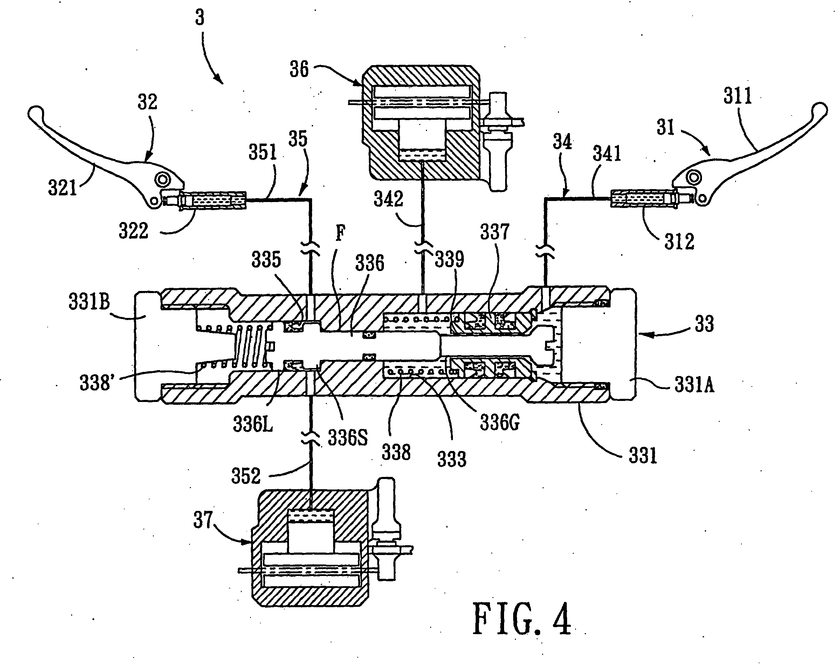

Referring to Fig. 4, the first preferred embodiment of a hydraulic vehicle brake system 3 according to this invention is applied to a two-wheeled motorcycle having a front wheel unit (not shown) and a rear wheel unit (not shown) that are formed respectively from a front wheel and a rear wheel, and is shown to include a first control unit 31, a second control unit 32, a large hydraulic cylinder 33, a first oil conduit unit 34, a second oil conduit unit 35, a front brake unit 36 for braking the front wheel, and a rear brake unit 37 for braking the rear wheel.

The first control unit 31 has a right brake lever 311 and a right small hydraulic cylinder 312. The second control unit 32 has a controlling element 321 in the form of a left brake lever 321 and an auxiliary small hydraulic cylinder 322.

The large hydraulic cylinder 33 includes a cylinder body 331 with an inward flange (F), a movable rod 336 disposed movably within the cylinder body 331 in such a manner that a liquid-tight seal is established between the movable rod 336 and the inward flange (F), a sleeve 337, and a pair of first and second resilient elements 338, 338' constructed as coiled compression springs. The cylinder body 331 has a first end wall (331A), a second end wall (331B), and an inner surface that is formed with the inward flange (F), which extends radially and inwardly therefrom to define a first oil chamber 333 between the inward flange (F) and the first end wall (331A). The movable rod 336 is biased by the first and second resilient elements 338, 338' to a non-operating position when the left and right brake levers 321, 311 are not actuated, and has a right end portion with an annular groove (336G), a large-diameter outward flange (336L) extending radially and outwardly from a left end thereof and disposed movably and sealingly within the large hydraulic cylinder 33 to define a second oil chamber 335 between the large-diameter outward flange (336L) and the inward flange (F) of the cylinder body 331, and a small-diameter outward flange (336S) that is disposed within the second oil chamber 335 between the large-diameter outward flange (336L) and the inward flange (F) of the cylinder body 331, that extends radially and outwardly from the movable rod 336, and that has an outer diameter smaller than that of the large-diameter outward flange (336L). The second resilient element 338' is disposed in the cylinder body 331 between the second end wall (331B) of the cylinder body 331 and the large-diameter outward flange (336L) so as to bias the small-diameter outward flange (336S) to abut against the inward flange (F) of the cylinder body 331 when the movable rod 336 is disposed at the non-operating position. The sleeve 337 is disposed around the movable rod 336, and is confined within the annular groove (336G) in such a manner that a clearance 339 is formed between the sleeve 337 and the movable rod 336 so as to permit oil flow through the clearance 339. The first resilient element 338 is sleeved around the movable rod 336 between the sleeve 337 and the inward flange (F) of the cylinder body 331.

The first oil conduit unit 34 includes an upstream portion 341 and a downstream portion 342. The upstream portion 341 is in fluid communication with the right small hydraulic cylinder 312 and the first oil chamber 333 in the large hydraulic cylinder 33. The downstream portion 342 is in fluid communication with the first oil chamber 333 in the large hydraulic cylinder 33 and the front brake unit 36. The upstream portion 341 is communicated with the first oil chamber 333 in the large hydraulic cylinder 33 at a position between the first end wall (331A) and the sleeve 337. The downstreamportion 342 is communicated with the first oil chamber 333 in the large hydraulic cylinder 33 at a position between the inward flange (F) of the cylinder body 331 and the sleeve 337.

The second oil conduit unit 35 includes an upstream portion 351 and a downstream portion 352. The upstream portion 351 is in fluid communication with the second oil chamber 335 in the large hydraulic cylinder 33. The downstream portion 352 is in fluid communication with the second oil chamber 335 in the large hydraulic cylinder 33 and the rear brake unit 37.

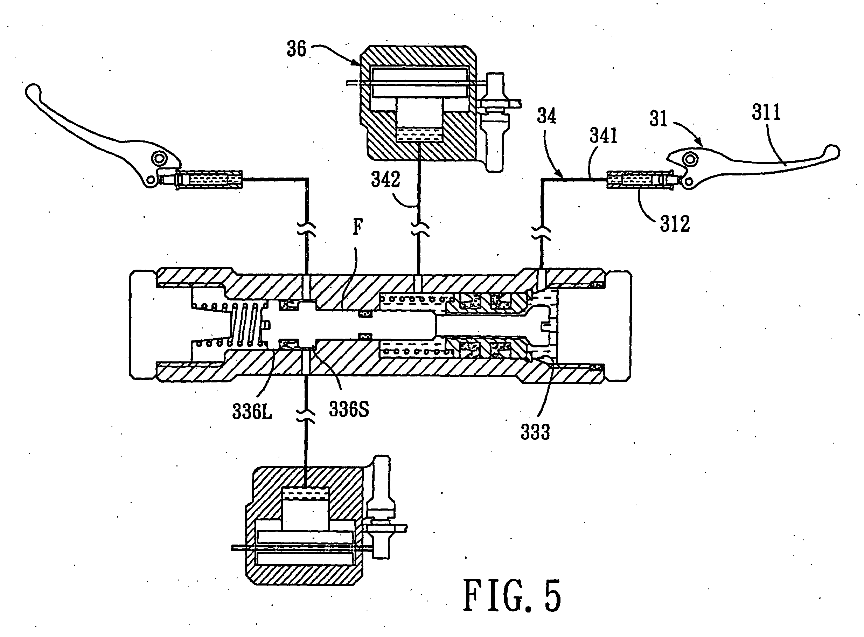

Referring to Fig. 5, when the right brake lever 311 is actuated, hydraulic oil flows from the right small hydraulic cylinder 312 into the front brake unit 36 through a flow path of the upstream portion 341 of the first oil conduit unit 34, the first oil chamber 333 in the large hydraulic cylinder 33, and the downstream portion 342 of the first oil conduit unit 34 so as to brake the front wheel of the motorcycle.

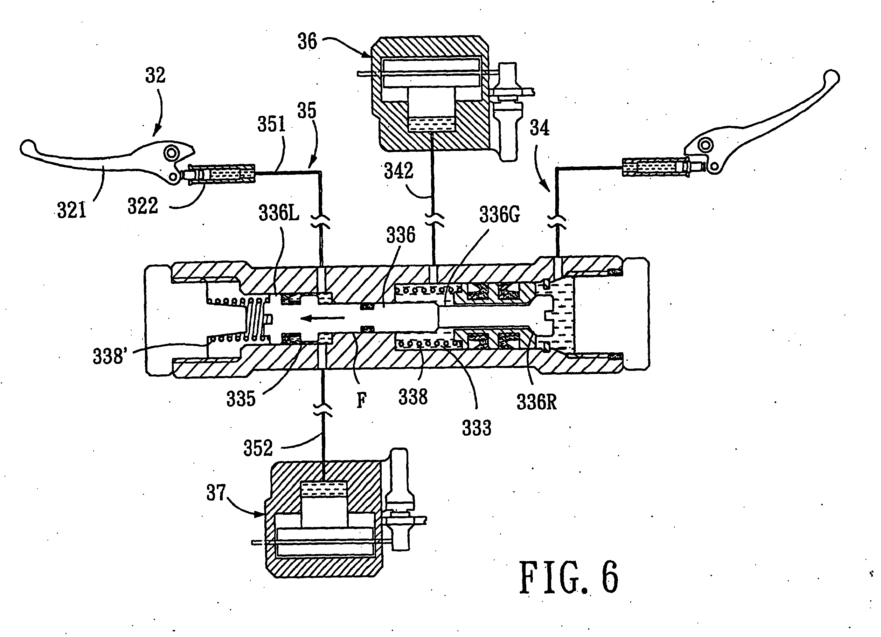

Referring to Fig. 6, when the left brake lever 321 is actuated, hydraulic oil flows from the auxiliary small hydraulic cylinder 322 into the rear brake unit 37 through a flow path of the upstream portion 351 of the second oil conduit unit 35, the second oil chamber 335 in the large hydraulic cylinder 33, and the downstream portion 352 of the second oil conduit unit 35 so as to brake the front wheel of the motorcycle. When the hydraulic oil flows into the second oil chamber 335 in the large hydraulic cylinder 33, the large-diameter outward flange (336L) of the movable rod 336 is pushed to the left to move the movable rod 336 to an operating position against the biasing action of the first and second resilient elements 338, 338' so that the clearance 339 is closed as a result of contact between the sleeve 337 and a shoulder (336R) of the movable rod 336, which defines a right end of the annular groove (336G), thereby urging the hydraulic oil between the inward flange (F) of the cylinder body 331 and the sleeve 337 to flow into the front brake unit 36 through the downstream portion 342 of the first oil conduit unit 34 for braking the front wheel of the motorcycle, after which the first and second resilient elements 338, 338' can restore the movable rod 336 to the non-operating position shown in Fig. 4. As such, the rear wheel is stopped just before the front wheel is stopped upon actuation of the left brake lever 321, thereby increasing the safety of the motorcycle rider.

Furthermore, because the first and second oil chambers 333, 335 are not in fluid communication with each other, once any one of the upstream and downstream portions 341, 342 of the first oil conduit unit 34 and the upstream and downstream portions 351, 352 of the second oil conduit unit 35 is broken, only the corresponding one of the front and rear brake units 36, 37 will malfunction. As such, the other one of the front and rear brake units 36, 37 can stop the motorcycle.

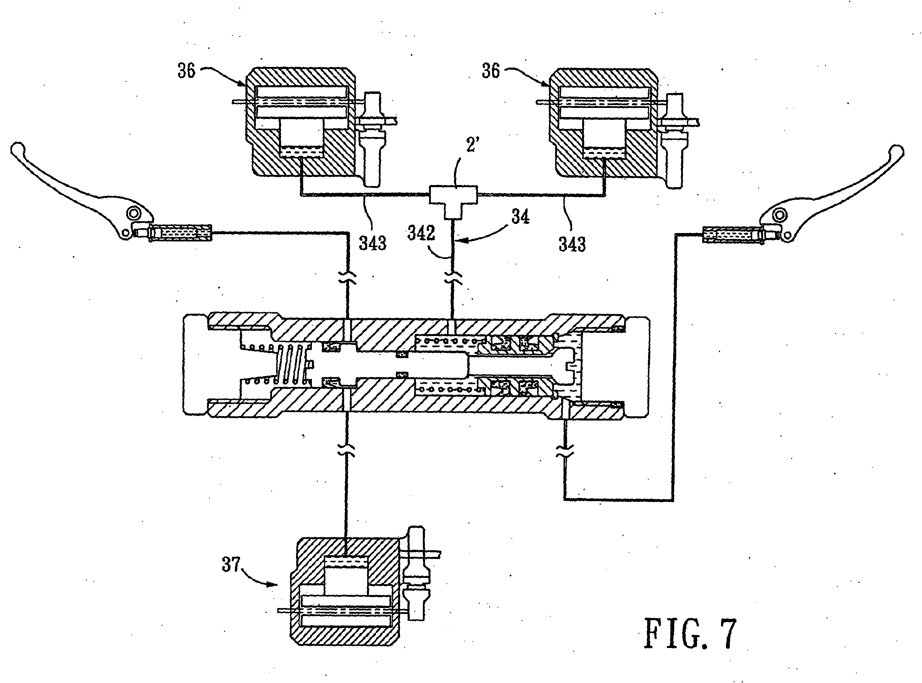

Fig. 7 shows the second preferred embodiment of a hydraulic vehicle brake system according to this invention, which is applied to a vehicle having a front wheel unit consisting of two front wheels, and a rear wheel unit consisting of two rear wheels that are connected fixedly to a common driving axle, which can be stopped by the rear brake unit 37. Unlike the first preferred embodiment, the downstream portion 342 of the first oil conduit unit 34 is in fluid communication with two branches 343 through a three-way tube 2'. The branches 343 are connected respectively to two front brake units 36 that are used to brake the front wheels, respectively.

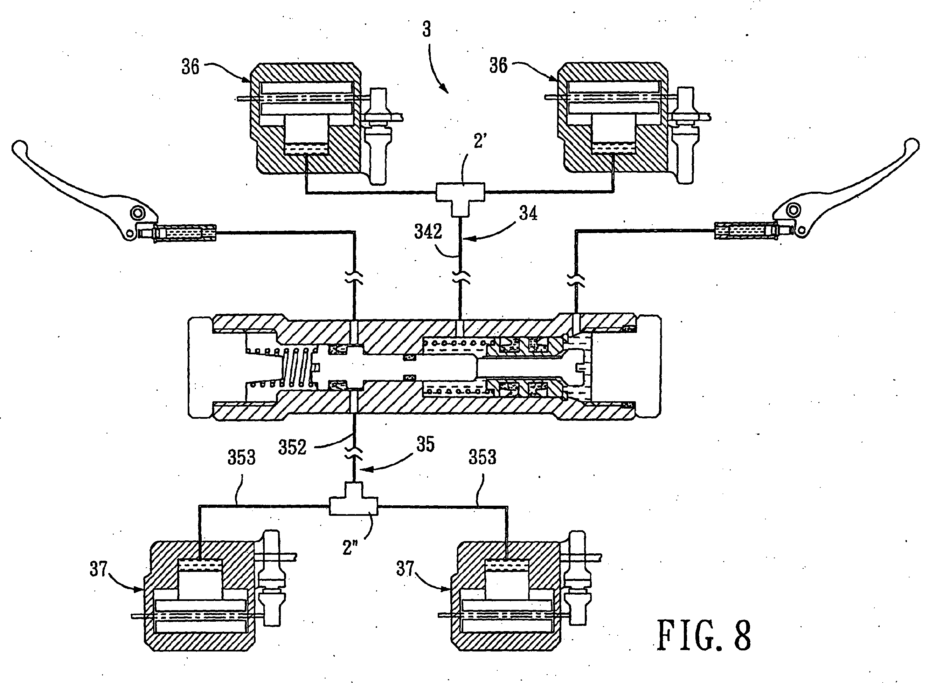

Fig. 8 shows the third preferred embodiment of a hydraulic vehicle brake system according to this invention, which is applied to a vehicle having two front wheels and two rear wheels. Unlike the second preferred embodiment, the downstream portion 352 of the second oil conduit unit 35 is in fluid communication with two branches 353 through a three-way tube 2". The branches 353 are connected respectively to two rear brake units 37 that are used to brake the rear wheels, respectively.

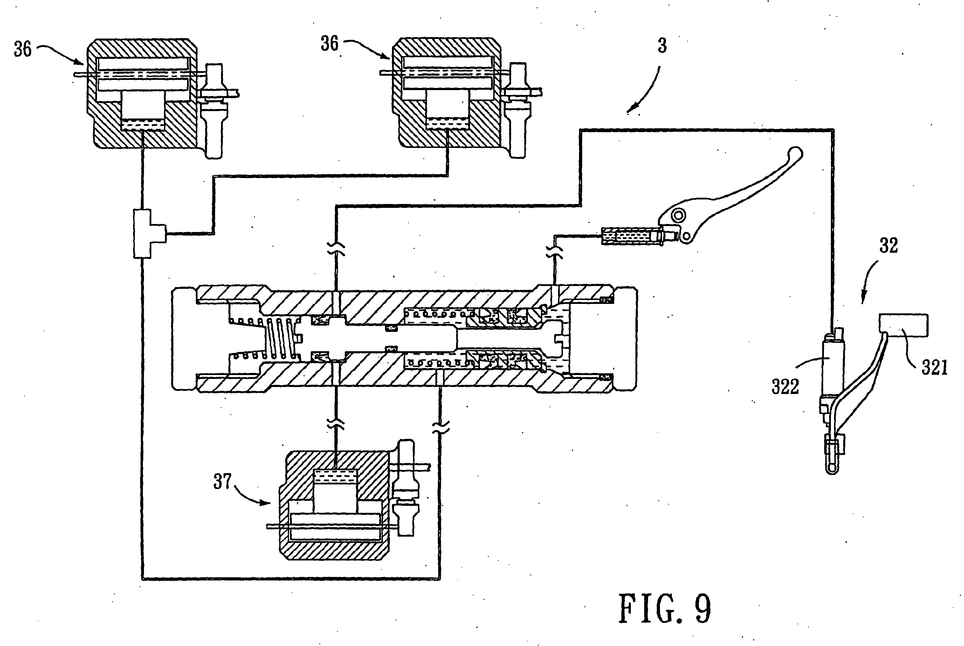

Fig. 9 shows the fourth preferred embodiment of a hydraulic vehicle brake system according to this invention, which is similar to the second preferred embodiment shown in Fig. 7 in construction except that the controlling element 321 is constructed as a pedal instead of a left brake lever.

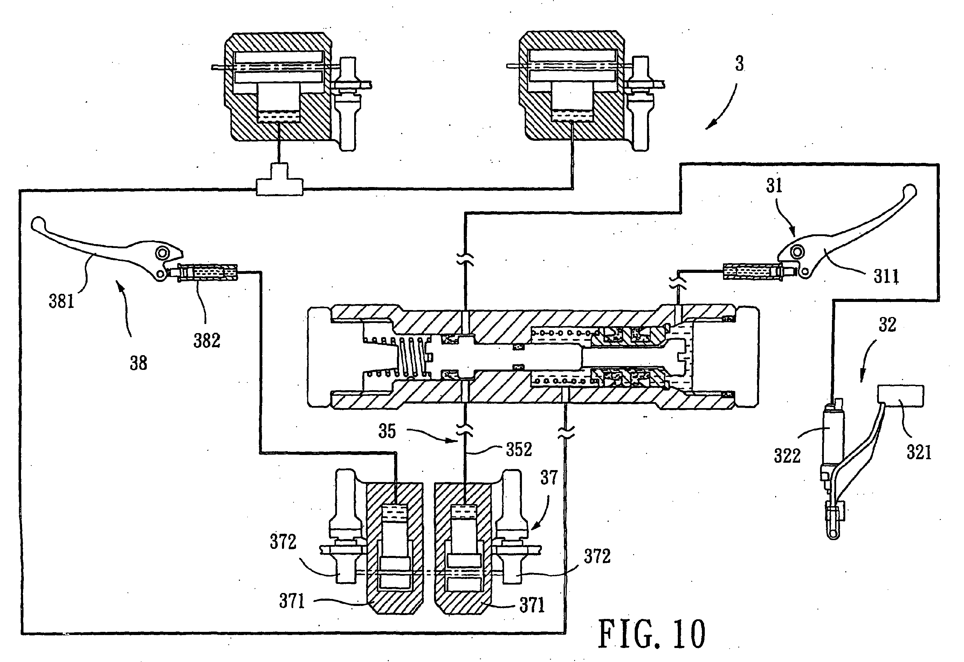

Fig. 10 shows the fifth preferred embodiment of a hydraulic vehicle brake system according to this invention, which is similar to the fourth preferred embodiment in construction except that this embodiment further includes a third control unit 38. The third control unit 38 includes a left brake lever 381 and a left small hydraulic cylinder 382 driven by the left brake lever 381 to activate the rear brake unit 37 so as to brake the rear wheel unit. In this embodiment, the rear brake unit 37 includes two hydraulic cylinders 371 that are in fluid communication with the auxiliary small hydraulic cylinder 322 and the left small hydraulic cylinder 382, respectively, and that are used to activate two braking disk units 372, respectively.

## Claims

1. A hydraulic vehicle brake system for a vehicle having a front wheel unit and a rear wheel unit, the hydraulic vehicle brake system including:
a large hydraulic cylinder (33)including a cylinder body (331), a movable rod (336), and a pair of first and second resilient elements (338, 338'), the cylinder body (331) having an inner surface that is formed with an inward flange (F) extending radially and inwardly therefrom, the movable rod (336) being disposed movably within the cylinder body (331) in such a manner that a liquid-tight seal is established between the movable rod (336) and the inward flange (F), thereby defining first and second oil chambers (333, 335) within the cylinder body (331), the first and second oil chambers (333, 335) being located on two sides of the inward flange (F) and being not in fluid communication with each other, the second resilient element (338') biasing the movable rod (336) to move to a non-operating position;
a first control unit (31) including a right brake lever (311), and a right small hydraulic cylinder (312) driven by the right brake lever (311);
a second control unit (32) including a controlling element (321), and an auxiliary small hydraulic cylinder (322) driven by the controlling element (321);
a first oil conduit unit (34) having an upstream portion (341) that is in fluid communication with the right small hydraulic cylinder (312) and the first oil chamber (333) in the large hydraulic cylinder (33), and a downstream portion (342) that is in fluid communication with the first oil chamber (333) in the large hydraulic cylinder (33) when the movable rod (336) is disposed at the non-operating position;
a front brake unit (36) connected to the downstream portion (342) of the first oil conduit unit (34) for braking the front wheel unit;
a second oil conduit unit (35) having an upstream portion (351) that is in fluid communication with the auxiliary small hydraulic cylinder (322) and the second oil chamber (335), and a downstream portion (352) that is in fluid communication with the second oil chamber (335); and a rear brake unit (37) connected to the downstream portion (352) of the second oil conduit unit (35) for braking the rear wheel unit;
whereby, when the right brake lever (311) is actuated, hydraulic oil flows from the right small hydraulic cylinder (312) into the front brake unit (36) through a flow path of the upstream portion (341) of the first oil conduit unit (34), the first oil chamber (333) in the large hydraulic cylinder (33), and the downstream portion (342) of the first oil conduit unit (34) so as to brake the front wheel unit of the vehicle; and
whereby, when the controlling element (321) is actuated, hydraulic oil flows from the auxiliary small hydraulic cylinder (322) into the rear brake unit (37) through a flow path of the upstream portion (351) of the second oil conduit unit (35), the second oil chamber (335) in the large hydraulic cylinder (33), and the downstream portion (352) of the second oil conduit unit (35) so as to brake the rear wheel unit and so as to move the movable rod (336) to an operating position where fluid communication between the upstream portion (341) and the downstream portion (342) of the oil conduit unit (34) is prevented and where the hydraulic oil flows from the first oil chamber (333) in the large hydraulic cylinder (33) into the front brake unit (36) through the downstream portion (342) of the first oil conduit unit (34) to thereby brake the front wheel unit of the vehicle, after which the first and second resilient elements (338, 338') can restore the movable rod (336) to the non-operating position;
**characterized by**:
the movable rod (336) having a large-diameter outward flange (336L) extending radially and outwardly from an end thereof and disposed movably and sealingly within the large hydraulic cylinder (33) to define the second oil chamber (335) between the large-diameter outward flange (336L) and the inward flange (F) of the cylinder body (331), and a small-diameter outward flange (336S) that is disposed within the second oil chamber (335) between the large-diameter outward flange (336L) and the inward flange (F) of the cylinder body (331), that extends radially and outwardly from the movable rod (336), that has an outer diameter smaller than that of the large-diameter outward flange (336L), and that is biased by the second resilient element (338') to abut against the inward flange (F) of the cylinder body (331) when the movable rod (336) is disposed at the non-operating position;
the cylinder body (331) of the large hydraulic cylinder (33) having a first end wall (331A) and a second end wall (331B), the first oil chamber (333) being defined between the first end wall (331A) and the inward flange (F) of the cylinder body (331);
the movable rod (336) having an annular groove (336G); the large hydraulic cylinder (33) further including a sleeve (337) that is disposed around the movable rod (336) and confined within the annular groove (336G) in such a manner that a clearance (339) is formed between the sleeve (337) and the movable rod (336) so as to permit oil flow through the clearance (339) when the movable rod (336) is disposed at the non-operating position and so as to prevent oil flow through the clearance (339) when the movable rod (336) is moved from the non-operating position to the operating position;
the first resilient element (338) being constructed as a coiled compression spring and being sleeved around the movable rod (336) between the sleeve (337) and the inward flange (F) of the cylinder body (331) so as to bias the sleeve (337) to contact a portion of the movable rod (336), thereby closing the clearance (339) when the movable rod (336) is disposed at the operating position; and
the second resilient element (338') being constructed as a coiled compression spring and being disposed between the second end wall (331B) of the cylinder body (331) and the large-diameter outward flange (336L) of the movable rod (336).

2. The hydraulic vehicle brake system as claimed in Claim 1, **characterized in that** the controlling element (321) is constructed as a left brake lever.

3. The hydraulic vehicle brake system as claimed in Claim 1, **characterized in that** the controlling element (321) is constructed as a pedal.

4. The hydraulic vehicle brake system as claimed in Claim 3, further **characterized by** a third control unit (38) that includes:
a left brake lever (381); and
a left small hydraulic cylinder (382) driven by the left brake lever (381) to activate the rear brake unit (37) so as to brake the rear wheel unit.

## Patentansprüche

1. Hydraulische Fahrzeugbremsanlage für ein Fahrzeug, das eine Vorderradeinheit und eine Hinterradeinheit aufweist, wobei die hydraulische Fahrzeugbremsanlage umfasst:
einen großen Hydraulikzylinder (33), umfassend ein Zylindergehäuse (331), eine verschiebbare Stange (336) und ein Paar erster und zweiter elastischer Elemente (338, 338'), wobei das Zylindergehäuse (331) eine Innenfläche aufweist, die mit einem nach innen gerichteten Flansch (F) gebildet ist, der sich von dort aus radial und nach innen erstreckt, wobei die verschiebbare Stange (336) innerhalb des Zylindergehäuses (331) in der Weise verschiebbar angeordnet ist, dass ein flüssigkeitsfester Verschluss zwischen der verschiebbaren Stange (336) und dem nach innen gerichteten Flansch (F) entsteht, wodurch die erste und zweite Ölkammer (333, 335) innerhalb des Zylindergehäuses (331) festgelegt sind, wobei die erste und zweite Ölkammer (333, 335) an beiden Seiten des nach innen gerichteten Flansches (F) liegen und in keinem Flüssigkeitsaustausch miteinander stehen, wobei das zweite elastische Element (338') die verschiebbare Stange (336) vorspannt, sich in eine nicht-betriebsbereite Position zu bewegen;
eine erste Steuereinheit (31), umfassend einen rechten Bremshebel (311) und einen rechten kleinen Hydraulikzylinder (312), der von dem rechten Bremshebel (311) angetrieben wird;
eine zweite Steuereinheit (32), umfassend ein Steuerungselement (321) und einen kleinen Hilfshydraulikzylinder (322), der von dem Steuerungselement (321) angetrieben wird;
eine erste Ölführungseinheit (34), die einen vorgeschalteten Abschnitt (341) aufweist, der mit dem rechten kleinen Hydraulikzylinder (312) und der ersten Ölkammer (333) in dem großen Hydraulikzylinder (33) in Flüssigkeitsaustausch steht, und einen nachgeschalteten Abschnitt (342), der mit der ersten Ölkammer (333) in dem großen Hydraulikzylinder (33) in Flüssigkeitsaustausch steht, wenn die bewegliche Stange (336) in der nicht-betriebsbereiten Position angeordnet ist;
eine vordere Bremseinheit (36), die mit dem nachgeschalteten Abschnitt (342) der ersten Ölführungseinheit (34) zum Bremsen der Vorderradeinheit verbunden ist;
eine zweite Ölführungseinheit (35), die einen vorgeschalteten Abschnitt (351) aufweist, der mit dem kleinen Hilfshydraulikzylinder (322) und der zweiten Ölkammer (335) in Flüssigkeitsaustausch steht, und einen nachgeschalteten Abschnitt (352), der mit der zweiten Ölkammer (335) in Flüssigkeitsaustausch steht; und eine hintere Bremseinheit (37), die mit dem nachgeschalteten Abschnitt (352) der zweiten Ölführungseinheit (35) zum Bremsen der Hinterradeinheit verbunden ist;
wodurch, wenn der rechte Bremshebel (311) betätigt wird, Hydrauliköl von dem rechten kleinen Hydraulikzylinder (312) in die vordere Bremseinheit (36) über eine Strömungsstrecke des vorgeschalteten Abschnitts (341) der ersten Ölführungseinheit (34), die erste Ölkammer (333) in dem großen Hydraulikzylinder (33) und den nachgeschalteten Abschnitt (342) der ersten Ölführungseinheit (34) fließt, um die Vorderradeinheit des Fahrzeugs zu bremsen; und
wodurch, wenn das Steuerungselement (321) betätigt wird, Hydrauliköl von dem kleinen Hilfshydraulikzylinder (322) in die hintere Bremseinheit (37) über eine Strömungsstrecke des vorgeschalteten Abschnitts (351) der zweiten Ölführungseinheit (35), die zweite Ölkammer (335) in dem großen Hydraulikzylinder (33) und den nachgeschalteten Abschnitt (352) der zweiten Ölführungseinheit (35) fließt, sodass die Hinterradeinheit gebremst und die bewegliche Stange (336) in eine betriebsbereite Position bewegt wird, wodurch ein Flüssigkeitsaustausch zwischen dem vorgeschalteten Abschnitt (341) und dem nachgeschalteten Abschnitt (342) der Ölführungseinheit (34) verhindert wird und wodurch das Hydrauliköl von der ersten Ölkammer (333) in dem großen Hydraulikzylinder (33) in die vordere Bremseinheit (36) über den nachgeschalteten Abschnitt (342) der ersten Ölführungseinheit (34) fließt, um **dadurch** die Vorderradeinheit des Fahrzeugs zu bremsen, wonach die ersten und zweiten elastischen Elemente (338, 338') die bewegliche Stange (336) in die nicht-betriebsbereiten Position zurückstellen;
**dadurch gekennzeichnet, dass**
die bewegliche Stange (336), die einen nach außen gerichteten Flansch mit einem großen Durchmesser (336L) aufweist, der sich radial und von einem Ende davon nach außen erstreckt und der verschiebbar und versiegelnd innerhalb des großen Hydraulikzylinders (33) angeordnet ist, um die zweite Ölkammer (335) zwischen dem nach außen gerichteten Flansch mit dem großen Durchmesser (336L) und dem nach innen gerichteten Flansch (F) des Zylindergehäuses (331) festzulegen, und einen nach außen gerichteten Flansch mit einem kleinen Durchmesser (336S), der innerhalb der zweiten Ölkammer (335) zwischen dem nach außen gerichteten Flansch mit dem großen Durchmesser (336L) und dem nach innen gerichteten Flansch (F) des Zylindergehäuses (331) angeordnet ist, der sich radial und von der verschiebbaren Stange (336) nach außen erstreckt, der einen kleineren Außendurchmesser als der nach außen gerichtete Flansch mit dem großen Durchmesser (336L) aufweist und der durch das zweite elastische Element (338') vorgespannt ist, um an den nach innen gerichteten Flansch (F) des Zylindergehäuses (331) anzuliegen, wenn die verschiebbare Stange (336) in der nicht-betriebsbereiten Position angeordnet ist;
das Zylindergehäuse (331) des großen Hydraulikzylinders (33), das eine erste Endwand (331A) und eine zweite Endwand (331B) aufweist, die erste Ölkammer (333), die zwischen der ersten Endwand (331A) und dem nach innen gerichteten Flansch (F) des Zylindergehäuses (331) festgelegt ist;
die verschiebbare Stange (336), die eine Ringnut (336G) aufweist; der große Hydraulikzylinder (33), der ebenfalls eine Buchse (337) umfasst, die um die verschiebbare Stange (336) angeordnet und innerhalb der Ringnut (336G) in der Weise eingeschlossen ist, dass ein Spalt (339) zwischen der Buchse (337) und der verschiebbaren Stange (336) gebildet wird, um zu ermöglichen, dass Öl durch den Spalt (339) fließt, wenn die verschiebbare Stange (336) in der nicht-betriebsbereiten Position angeordnet ist, und um zu verhindern, dass Öl durch den Spalt (339) fließt, wenn die verschiebbare Stange von der nicht-betriebsbereiten Position in die betriebsbereite Position verschoben wird;
das erste elastische Element (338), das als Spiraldruckfeder ausgebildet ist und die verschiebbare Stange (336) zwischen der Buchse (337) und dem nach innen gerichteten Flansch (F) des Zylindergehäuses (331) umhüllt, um die Buchse (337) vorzuspannen, um einen Abschnitt der verschiebbaren Stange (336) zu berühren, wodurch der Spalt (339) geschlossen wird, wenn die verschiebbare Stange (336) in der betriebsbereiten Position angeordnet ist; und
das zweite elastische Element (338'), das als Spiraldruckfeder ausgebildet ist und zwischen der zweiten Endwand (331B) des Zylindergehäuses (331) und dem nach außen gerichteten Flansch mit dem großen Durchmesser (336L) der verschiebbaren Stange (336) angeordnet ist.

2. Hydraulische Fahrzeugbremsanlage nach Anspruch 1, **dadurch gekennzeichnet, dass** das Steuerungselement (321) als ein linker Bremshebel ausgeführt ist.

3. Hydraulische Fahrzeugbremsanlage nach Anspruch 1, **dadurch gekennzeichnet, dass** das Steuerungselement (321) als ein Pedal ausgeführt ist

4. Hydraulische Fahrzeugbremsanlage nach Anspruch 3, ebenfalls **dadurch gekennzeichnet, dass** eine dritte Steuereinheit (38) Folgendes umfasst:
einen linken Bremshebel (381) und
einen linken kleinen Hydraulikzylinder (382), der von dem linken Bremshebel (381) angetrieben wird, um die hintere Bremseinheit (37) zu betätigen, um die Hinterradeinheit zu bremsen.

## Revendications

1. Système de freinage hydraulique pour véhicule pour un véhicule ayant une unité de roue avant et une unité de roue arrière, le système de freinage hydraulique pour véhicule comprenant :
un grand vérin hydraulique (33) comprenant un corps de vérin (331), une tige mobile (336) et une paire de premier et second éléments élastiques (338, 338'), le corps de vérin (331) ayant une surface interne qui est formée avec un rebord interne (F) s'étendant radialement et vers l'intérieur à partir de celui-ci, la tige mobile (336) étant disposée de manière mobile à l'intérieur du corps de vérin (331) de sorte qu'un joint étanche aux liquides est établi entre la tige mobile (336) et le rebord interne (F), définissant ainsi des première et seconde chambres à huile (333, 335) à l'intérieur du corps de vérin (331), les première et seconde chambres à huile (333, 335) étant situées des deux côtés du rebord interne (F), et n'étant pas en communication de fluide entre elles, le second élément élastique (338') sollicitant la tige mobile (336) pour se déplacer dans une position non opérationnelle ;
une première unité de commande (31) comprenant une poignée de frein droite (311), et un petit vérin hydraulique droit (312) entraîné par la poignée de frein droite (311) ;
une seconde unité de commande (32) comprenant un élément de commande (321), et un petit vérin hydraulique auxiliaire (322) entraîné par l'élément de commande (321) ;
une première unité de conduite d'huile (34) ayant une partie amont (341) qui est en communication de fluide avec le petit vérin hydraulique droit (312) et la première chambre à huile (333) dans le grand vérin hydraulique (33), et une partie aval (342) qui est en communication de fluide avec la première chambre à huile (333) dans le grand vérin hydraulique (33) lorsque la tige mobile (336) est disposée dans la position non opérationnelle ;
une unité de frein avant (36) raccordée à la partie aval (342) de la première unité de conduite d'huile (34) pour freiner l'unité de roue avant ;
une seconde unité de conduite d'huile (35) ayant une partie amont (351) qui est communication de fluide avec le petit vérin hydraulique auxiliaire (322) et la seconde chambre à huile (335), et une partie aval (352) qui est en communication de fluide avec la seconde chambre à huile (335) ; et une unité de frein arrière (37) raccordée à la partie aval (352) de la seconde unité de conduite d'huile (35) pour freiner l'unité de roue arrière ;
moyennant quoi lorsque la poignée de frein droite (331) est actionnée, l'huile hydraulique s'écoule à partir du petit vérin hydraulique droit (312) dans l'unité de frein avant (36) en passant par un passage d'écoulement de la partie amont (341) de la première unité de conduite d'huile (34), la première chambre à huile (333) dans le grand vérin hydraulique (33), et la partie aval (342) de la première unité de conduite d'huile (34) afin de freiner l'unité de roue avant du véhicule ; et
moyennant quoi lorsque l'élément de commande (321) est actionné, l'huile hydraulique s'écoule à partir du petit vérin hydraulique auxiliaire (322) dans l'unité de frein arrière (37) en passant par un passage d'écoulement de la partie amont (351) de la seconde unité de conduite d'huile (35), la seconde chambre à huile (335) dans le grand vérin hydraulique (33), et la partie aval (352) de la seconde unité de conduite d'huile (35) afin de freiner l'unité de roue arrière et afin de déplacer la tige mobile (336) dans une position opérationnelle dans laquelle on empêche la communication de fluide entre la partie amont(341) et la partie aval (342) de l'unité de conduite d'huile (34), et dans laquelle l'huile hydraulique s'écoule à partir de la première chambre à huile (333) dans le grand vérin hydraulique (33) dans l'unité de frein avant (36) en passant par la partie aval (342) de la première unité de conduite d'huile (34) pour freiner ainsi l'unité de roue avant du véhicule, après quoi les premier et second éléments élastiques (338, 338') peuvent ramener la tige mobile (336) dans la position non opérationnelle ;
**caractérisé par** :
la tige mobile (336) ayant un rebord externe de grand diamètre (336L) s'étendant de manière radiale et vers l'extérieur à partir de son extrémité et disposé de manière mobile et étanche à l'intérieur du grand vérin hydraulique (33) pour définir la seconde chambre à huile (335) entre le rebord externe de grand diamètre (336L) et le rebord interne (F) du corps de vérin (331), et un rebord externe de petit diamètre (336S) qui est disposé à l'intérieur de la seconde chambre à huile (335) entre le rebord externe de grand diamètre (336L) et le rebord interne (F) du corps de vérin (331), qui s'étend radialement et vers l'extérieur à partir de la tige mobile (336), qui a un plus petit diamètre externe que celui du rebord externe de grand diamètre (336L) et qui est sollicité par le second élément élastique (338') pour venir en butée contre le rebord interne (F) du corps de vérin (331) lorsque la tige mobile (336) est disposée dans la position non opérationnelle ;
le corps de vérin (331) du grand vérin hydraulique (33) ayant une première paroi d'extrémité (331A) et une seconde paroi d'extrémité (331B), la première chambre à huile (333) étant définie entre la première paroi d'extrémité (331A) et le rebord interne (F) du corps de vérin (331) ;
la tige mobile (336) ayant une rainure annulaire (336G) ; le grand vérin hydraulique (33) comprenant en outre un manchon (337) qui est disposé autour de la tige mobile (336) et confiné à l'intérieur de la rainure annulaire (336G) de sorte qu'un jeu (339) est formé entre le manchon (337) et la tige mobile (336) pour permettre l'écoulement d'huile à travers le jeu (339) lorsque la tige mobile (336) est disposée dans la position non opérationnelle et afin d'empêcher l'écoulement d'huile à travers le jeu (339) lorsque la tige mobile (336) est déplacée de la position non opérationnelle à la position opérationnelle ;
le premier élément élastique (338) étant construit comme un ressort de compression hélicoïdal chemisé autour de la tige mobile (336) entre le manchon (337) et le rebord interne (F) du corps de vérin (331) afin de solliciter le manchon (337) pour entrer en contact avec une partie de la tige mobile (336), fermant ainsi le jeu (339) lorsque la tige mobile (336) est disposée dans la position opérationnelle ; et
le second élément élastique (338') étant construit comme un ressort de compression hélicoïdal et étant disposé entre la seconde paroi d'extrémité (331B) du corps de vérin (331) et le rebord externe de grand diamètre (336L) de la tige mobile (336).

2. Système de freinage hydraulique pour véhicule selon la revendication 1, **caractérisé en ce que** l'élément de commande (321) est construit comme une poignée de frein gauche.

3. Système de freinage hydraulique pour véhicule selon la revendication 1, **caractérisé en ce que** l'élément de commande (321) est construit comme une pédale.

4. Système de freinage hydraulique pour véhicule selon la revendication 3, **caractérisé en outre par** une troisième unité de commande (38) qui comprend :
une poignée de frein gauche (381) ; et
un petit vérin hydraulique gauche (382) entraîné par la poignée de frein gauche (381) pour activer l'unité de frein gauche (37) afin de freiner l'unité de roue arrière.
